# EUROPEAN PATENT APPLICATION

(11) **EP 4 386 351 A1**
(43) Date of publication of application: **19.06.2024**
(21) Application number: 22861020.0
(22) Date of filing: 20.07.2022
(51) Int. Cl.: G01M 7/02, G05B 23/02

(54) **VIBRATION TEST SUPPORT NETWORK SYSTEM**

(30) Priority: 27.08.2021 JP 2021139382
(71) Applicant: IMV Corporation, Osaka-shi, Osaka 555-0011 (JP)
(72) Inventor: MIYANISHI Yasushi, Osaka-shi Osaka 555-0011 (JP); UCHIYAMA Yasuhiro, Osaka-shi Osaka 555-0011 (JP); SUDO Mutsuhito, Osaka-shi Osaka 555-0011 (JP); NAKAMURA Katsuhiko, Osaka-shi Osaka 555-0011 (JP)
(74) Representative: Isarpatent
(86) International application number: PCT/JP2022/028270
(87) International publication number: WO 2023/026729

(57) **Abstract**

There is provided a vibration test support network system that connects a plurality of vibration test devices via a network and supports maintenance of vibration test devices and stabilization of accuracy of the vibration test through analysis of self-diagnosis information by the vibration test devices. A vibration test support network system 300 includes a plurality of vibration test devices 200, a network 210 connecting the plurality of vibration test devices 200, and an analysis device 220 connected to the network 210 and configured to transmit and receive information to and from the plurality of vibration test devices 200 via the network 210. The information includes at least any of: self-diagnosis information generated by the vibration test device 200; remote diagnosis information generated by the analysis device 220; maintenance information related to updates, maintenance, or support of the vibration test device 200; or vibration test information related to vibration tests performed on the vibration test device 200.

## Description

### TECHNICAL FIELD

The present invention relates to a vibration test support network system that connects a plurality of vibration test devices via a network and supports maintenance of vibration test devices and stabilization of accuracy of the vibration test through analysis and the like of self-diagnosis information by the vibration test devices.

### BACKGROUND ART

Traditionally, there has been known a vibration test device for a vibration test on various articles such as automobile parts and tires. The vibration test device has a shaker that vibrates the shaker table while a test piece is held on the shaker table, to perform vibration test. By having the shaker vibrating the test piece so as to simulate the actual state of use, the vibration characteristics and safety of the item can be evaluated.

When the shaker table is vibrated during a vibration test, it may vibrate not only in a shaking direction but also in a direction other than the shaking direction (crosstalk). For example, when the shaker table is vibrated in the vertical direction, the crosstalk in the horizontal direction takes place. Possible causes of the crosstalk are believed to be a slight gap in a support mechanism of the shaker table, deterioration of the shaker over time, and the like. A vibration test device that suppresses the crosstalk has been proposed, for example, in Patent Document 1.

While the crosstalk of the shaker table is mechanically inevitable, the crosstalk may gradually increase with deterioration of the shaker over time. The crosstalk, when increases beyond a certain level, may harm the accuracy of the vibration test. Further, continuous use of the shaker without maintenance while the crosstalk of the shaker table has increased, may lead to a failure of the shaker. To address this problem, a technique has been proposed to diagnose the state of vibration test device by comparing the magnitude of crosstalk with a predetermined threshold value.

### CITATION LIST

### PATENT DOCUMENT

Patent Document 1: Japanese Unexamined Patent Publication No. 2019-2731

### SUMMARY OF THE INVENTION

### TECHNICAL PROBLEM

However, the vibration test devices are each used under a variety of test conditions, and how much the progression of deterioration of the shaker over time also varies from one vibration test device to another. Therefore, it has been difficult to accurately diagnose, for each of the vibration test devices, whether or not a failure is currently taking place and the timing and probability of a failure that may take place in the future.

In view of the above-described challenges, it is an object of the present invention to provide a vibration test support network system that connects a plurality of vibration test device via a network and supports maintenance of vibration test device and stabilization of accuracy of the vibration test through analysis of self-diagnosis information by the vibration test devices.

### SOLUTION TO THE PROBLEM

The present invention adopts following configurations to solve the above problems. Namely, a vibration test support network system of the present invention includes a plurality of vibration test devices each having a shaker configured to shake a shaker table, a network that connects the plurality of vibration test devices, and an analysis device connected to the network and configured to transmit and receive information to and from the plurality of vibration test devices via the network. The information includes at least any of: self-diagnosis information related to the plurality of vibration test devices, which is generated by the plurality of vibration test devices, remote diagnosis information related to the plurality of vibration test device, which is generated by the analysis device, maintenance information related to updates, maintenance, or support of the plurality of vibration test devices, or vibration test information related to vibration tests performed on the plurality of vibration test devices, the self-diagnosis information includes at least one of a failure determination, a failure prediction, or a performance limit determination, each of which is information related to the plurality of vibration test devices, and the remote diagnosis information includes at least one of a failure frequency, a failure probability, or a maintenance/inspection timing, each of which is information related to the vibration test device (first configuration).

According to the above configuration, by connecting the plurality of vibration test devices to a network, it is possible to share information among the plurality of vibration test devices and to remotely notify information to each vibration test device. This makes it possible to support the maintenance of vibration test devices and stabilization of accuracy of vibration tests through analysis of self-diagnosis information by the vibration test devices.

As a specific configuration of the vibration test support network system of the present invention, there are following configurations. In the first configuration, the analysis device may include a self-diagnosis information storage configured to store the self-diagnosis information associated with each of the plurality of vibration test devices, a remote diagnosis reference storage configured to store remote diagnosis reference information related to the remote diagnosis, and a remote diagnosis unit configured to generate remote diagnosis information based on the self-diagnosis information stored in the self-diagnosis information storage and the remote diagnosis reference information stored in the remote diagnosis reference storage (second configuration).

According to the above configuration, it is possible to remotely diagnose a failure frequency, a failure probability, and a maintenance/inspection timing related to the vibration test devices.

In the first configuration, the analysis device may include a self-diagnosis information storage configured to store the self-diagnosis information associated with each of the plurality of vibration test devices, and a remote diagnosis unit with a learning model that is trained to output remote diagnosis information upon input of the self-diagnosis information (third configuration).

According to the above configuration, by inputting self-diagnosis information into the learning model, information such as a failure frequency, a failure probability, and a maintenance/inspection timing related to the vibration test device can be output.

In the second or third configuration, the vibration test device may include a detector configured to detect a state of the vibration test device, a self-diagnosis reference storage configured to store self-diagnosis reference information related to self-diagnosis, and a self-diagnosis unit configured to generate the self-diagnosis information based on a detection signal output from the detector and the self-diagnosis reference information stored in the self-diagnosis reference storage, and the analysis device may perform data analysis based on the detection signal and the self-diagnosis information obtained from each of the plurality of vibration test devices via the network, and generate self-diagnosis reference update information for updating the self-diagnosis reference information based on a result of the data analysis, and update, via the network, the self-diagnosis determination reference stored in the self-diagnosis reference storage of each of the plurality of vibration test devices based on the self-diagnosis reference update information (fourth configuration).

According to the above configuration, the analysis device can generate self-diagnosis reference update information to update the self-diagnosis reference information stored in the vibration test device based on these pieces of information by acquiring detection signals and self-diagnosis information from the plurality of vibration test devices via the network. The self-diagnosis determination reference stored in each of the plurality of vibration test devices can then be updated via the network. Therefore, by updating the self-diagnosis determination reference stored in each vibration test device via the network, the accuracy of the self-diagnosis performed by each vibration test device can be continuously improved.

In the second or third configuration, the vibration test device may include a detector configured to detect a state of the vibration test device, a self-diagnosis reference storage configured to store self-diagnosis reference information related to self-diagnosis, and a self-diagnosis unit configured to generate the self-diagnosis information based on a detection signal output from the detector and the self-diagnosis reference information stored in the self-diagnosis reference storage, and the analysis device may include a learning model that is trained to output self-diagnosis reference update information that updates the self-diagnosis reference information upon input of the detection signal and the self-diagnosis information obtained from each of the plurality of vibration test devices via the network, and update the self-diagnosis determination reference stored in the self-diagnosis reference storage of each of the plurality of vibration test devices based on the self-diagnosis reference update information output from the learning model via the network (fifth configuration).

According to the above configuration, the self-diagnosis reference update information for updating the self-diagnosis reference information stored in the vibration test devices can be output by obtaining the detection signal and the self-diagnosis information from each of the plurality of vibration test devices via the network and inputting these pieces of information into the learning model. The self-diagnosis determination reference stored in each of the plurality of vibration test devices can then be updated via the network. Therefore, by updating the self-diagnosis determination reference stored in each vibration test device via the network, the accuracy of the self-diagnosis performed by each vibration test device can be continuously improved.

In the fifth configuration, the analysis device may retrain the learning model using the detection signal and the self-diagnosis information obtained from each of the plurality of vibration test devices via the network (sixth configuration).

According to the above configuration, the accuracy of the output self-diagnosis reference update information can be improved by retraining the learning model.

In any one of the first to sixth configurations, each of the plurality of vibration test devices may include a drive controller configured to control drive of the shaker by controlling current and voltage applied to the shaker; a current detector configured to detect the current that controls vibration of the shaker; a voltage detector configured to detect the voltage that controls vibration of the shaker; a motion detector configured to detect physical quantities related to a motion of the shaker table; and a self-diagnosis unit that generates the self-diagnosis information, including a failure determination, a failure prediction, and a performance limit determination, based on detection signals output from the current detector, the voltage detector, and the motion detector

### (seventh configuration).

According to the above configuration, the self-diagnosis unit generates the self-diagnosis information related to the state of the vibration test device, including the failure determination, the failure prediction, and the performance limit determination, based on the detection signals output from the current detector, voltage detector, and motion detector. Therefore, the vibration test device is able to accurately perform self-diagnosis related to the state of the vibration test device, including a failure determination, a failure prediction, and a performance limit determination. Accordingly, the vibration test device can be stopped at an early stage, when a failure is determined as to have taken place, and when a failure is predicted, the failure can be avoided by performing maintenance of the vibration test device at an early stage. Further, since the vibration test can be performed while confirming the state of the vibration test device, the vibration test can be performed with the vibration test device in a good condition, thus stabilizing the quality of the vibration test.

In the seventh configuration, the self-diagnosis unit may include a motion calculation unit configured to calculate physical quantities related to a 6DoF motion of the shaker table, based on the detection signal output from the motion detector, and the self-diagnosis unit may generate the self-diagnosis information by adding the physical quantities related to the 6DoF motion calculated by the motion calculation unit (eighth configuration).

According to the above configuration, the self-diagnosis unit generates the self-diagnosis information related to the state of the vibration test device by adding the physical quantities related to the 6DoF motion calculated by the motion calculation unit. By adding evaluation related to the 6DoF motion of the shaker table, the vibration test device is able to accurately perform self-diagnosis related to the state of the vibration test device, including a failure determination, a failure prediction, and a performance limit determination.

The eighth configuration may include a motion storage configured to store a history of physical quantities related to the 6DoF motion calculated by the motion calculation unit, and the self-diagnosis unit may generate the self-diagnosis information by adding the history of physical quantities related to the 6DoF motion stored in the motion storage (ninth configuration).

According to the above configuration, the self-diagnosis unit generates the self-diagnosis information related to the state of the vibration test device by adding the history of physical quantities related to the 6DoF motion stored in the motion storage. Therefore, it is possible to evaluate changes and the like over time of the 6DoF motion of the shaker table, and accurately perform self-diagnosis related to the state of the vibration test device, including a failure determination, a failure prediction, and a performance limit determination of the vibration test device.

The eighth or ninth configuration above may further include a transmission rate calculation unit configured to calculate a transmission rate between the 6DoF motion of the shaker table and the current and voltage, based on the physical quantities related to the 6DoF motion of the shaker table, and detection signals output from the current detector and the voltage detector, and the self-diagnosis unit may generate the self-diagnosis information by adding the calculated transmission rate (tenth configuration).

According to the above configuration, the self-diagnosis unit generates the self-diagnosis information related to the state of the vibration test device by adding the transmission rate between the 6DoF motion of the shaker table and the current and voltage. Thus, for a failure and a performance limit of the vibration test device that may be attributed to various causes, it is possible to accurately perform self-diagnosis related to the state of the vibration test device, including a failure determination, a failure prediction, and a performance limit determination, by adding the transmission rate in addition to the 6DoF motion of the shaker table.

The tenth configuration may further include a transmission rate storage configured to store a history of transmission rates calculated by the transmission rate calculation unit, and the self-diagnosis unit may generate the self-diagnosis information by adding the history of the transmission rates stored in the transmission rate storage (eleventh configuration).

According to the above configuration, the self-diagnosis unit generates the self-diagnosis information related to the state of the vibration test device by adding the history of the transmission rates stored in the transmission rate storage. Therefore, it is possible to evaluate changes and the like over time in the transmission rate, and accurately perform self-diagnosis related to the state of the vibration test device, including a failure determination, a failure prediction, and a performance limit determination of the vibration test device.

### ADVANTAGES OF THE INVENTION

The vibration test support network system of the present invention makes it possible to connect the plurality of vibration test devices via a network, and support maintenance and stabilization of accuracy of the vibration test of each of the vibration test devices through analysis of self-diagnosis information by the vibration test devices.

### BRIEF DESCRIPTION OF THE DRAWINGS

FIG. 1 is a diagram showing a configuration of a vibration test support network system according to the first embodiment of the present invention.
FIG. 2 is a diagram showing the configuration of the vibration test device connected to the vibration test support network system.
FIG. 3 is a cross-sectional view of a shaker taken along a shaking axis.
FIG. 4 is a plan view of the shaker of FIG. 3 as viewed in a direction from the positive side to the negative side of the Z-axis direction.
FIG. 5 is a schematic diagram showing a configuration of a self-diagnosis system.
FIG. 6 is a schematic diagram showing a configuration of an analysis device.
FIG. 7 is a graph showing an exemplary change in coherence with respect to rotation around an axis, out of 6DoF motions.
FIG. 8 is a graph showing an exemplary history of transmission rates with respect to rotation around an axis, out of the 6DoF motions.
FIG. 9A is a diagram showing an exemplary display screen reporting a determination result related to the state of the vibration test device.
FIG. 9B is a diagram showing an exemplary display screen reporting a determination result related to the state of the vibration test device.
FIG. 9C is a diagram showing an exemplary display screen reporting a determination result related to the state of the vibration test device.

### [First Embodiment]

The following details a vibration test support network system 300 related to the first embodiment of the present invention, with reference to the drawings. In the drawings, the same reference characters are given to parts that are identical or equivalent to one another, and description for such parts are not repeated. It should be noted that configurations illustrated in the drawings referred to in the following description are simplified, schematized, or omit some constituting members, for the sake of easier understanding. Further, the dimensional ratios between components shown in each figure are not necessarily indicative of actual dimensional ratios.

### [Overall Configuration]

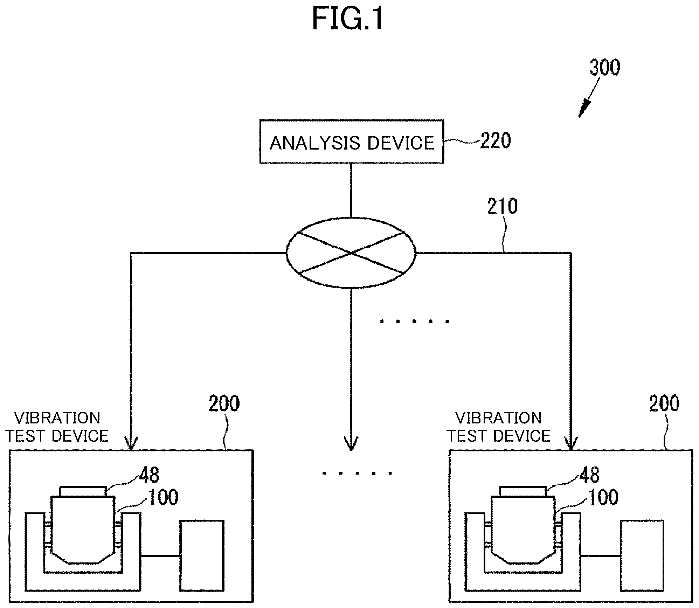

FIG. 1 is a diagram showing a configuration of a vibration test support network system 300 according to the first embodiment of the present invention. As illustrated in FIG. 1, the vibration test support network system 300 includes a plurality of vibration test devices 200, a network 210, and an analysis device 220.

The plurality of vibration test devices 200 each includes a shaker 100 that shakes the shaker table 48. In the present embodiment, each of the vibration test devices 200 connected to the network 210 is capable of performing self-diagnosis related to the state of the vibration test devices 200, such as a failure determination, a failure prediction, and a performance limit determination.

Each of the vibration test devices 200 has a predetermined specification of the frequency range, the maximum vibration force, the maximum acceleration, or the maximum on-board mass. The specifications of the plurality of vibration test devices 200 may be the same or different.

The plurality of vibration test devices 200 may be owned by the same owner or by different owners. The installation locations are not limited to a single building or within the same country, but may be in different buildings or in different countries or regions. Information related to each of the vibration test devices 200 is protected against inadvertent leakage, and the like. While information related to the state of the vibration test devices 200 and information on maintenance, and the like can be communicated via the network 210, certain restriction is imposed on communication of information related to the vibration test.

Network 210 connects the plurality of vibration test devices 200 to create cloud computing. Network 210 is a virtual closed network that uses Internet technology, with encryption technology.

The analysis device 220 is connected to the network 210. The analysis device 220 can be installed on a cloud server, for example. The analysis device 220 transmits and receives information to and from the plurality of vibration test devices 200 via the network 210, stores information obtained from the plurality of vibration test devices 200, and performs data analysis and other operations based on the stored information.

The information that the analysis device 220 transmits and receives to and from the plurality of vibration test devices 200 is, for example, self-diagnosis information related to the vibration test devices 200 which is generated by the vibration test devices 200, remote diagnosis information related to the vibration test devices 200 which is generated by the analysis device 220, maintenance information related to updates, maintenance, and support of the vibration test device 200, and vibration test information related to vibration tests performed on the vibration test device 200.

Among these pieces of information, self-diagnosis information is information generated by each of the vibration test devices 200 through self-diagnosis, such as the failure determination, the failure prediction, and the performance limit determination related to the vibration test devices 200. The failure determination means a determination that a failure has taken place in any component of the vibration test device 200, including a determination that the shaker 100 has failed. The failure prediction means a determination that the probability of failure taking place in any component of the vibration test device 200 is increasing, including a determination that the probability of a failure taking place in the shaker 100 is increasing. The performance limit determination means a determination that any component of the vibration test device 200 has reached its limit, including a determination that the performance of the shaker 100 has reached its limit (the frequency, amplitude, acceleration, weight of the test piece, and the like tolerable by the shaker 100).

The remote diagnosis information is information generated by the analysis device 220 through remote diagnosis. For example, the remote diagnosis information is a failure frequency, a failure probability, and a maintenance/inspection timing related to the vibration test device 200. The failure frequency refers to how often a failure takes place in the vibration test device 200, including the frequency of a failure taking place in the shaker 100. The failure probability refers to the probability of a failure taking place in the vibration test device 200, including the probability of a failure taking place in the shaker 100. Maintenance/inspection timing refers to temporal information about maintenance and inspection, including when maintenance and inspection of the vibration test device 200 should be performed.

### [Vibration Test Device]

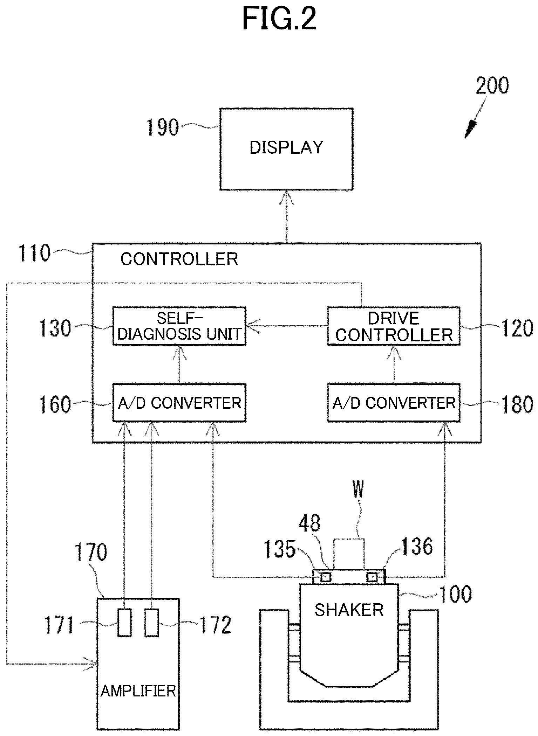

Next, the configuration of the vibration test device 200 is described. FIG. 2 is a diagram showing a configuration of a vibration test device 200 according to the first embodiment of the present invention. As illustrated in FIG. 2, the vibration test device 200 includes a shaker 100, a controller 110, an amplifier 170, a display 190, and the like.

The shaker 100 has a shaker table 48, and a test piece W is held on this shaker table 48. The vibration test is performed by vibrating the shaker table 48 while a test piece W is held on the shaker table 48. To this shaker table 48, a 3-axis acceleration sensor 135 and a control sensor 136 are arranged.

The 6-degree of freedom motion (hereinafter, 6DoF motion) of the shaker table 48 is described below. Shaking the shaker table 48 with the shaker 100 may cause not only the crosstalk but also vibration in the rotational direction in the shaker table 48. For example, shaking the shaker table 48 in the vertical axis direction (Z-axis direction) may lead not only to the crosstalk in the horizontal direction (X-axis direction, Y-axis direction), but also to vibration in a rotational direction about each of the X-axis, Y-axis, and Z-axis, in the shaker table 48.

That is, shaking the shaker table 48 with the shaker 100 may cause the 6DoF motions of the shaker table 48, including vibration in the shaking direction. The 6DoF motions include a motion in the axial direction of each of three axes (X-axis, Y-axis, and Z-axis) orthogonal to one another and rotational motion around each of the X-axis, Y-axis, and Z-axis. The 6DoF motions may take place in a vibration test device that shakes the shaker table in only one axial direction (e.g., the Z-axis direction), or may take place in a multi-axis vibration test device that shakes the shaker table in a plurality of directions (e.g., the X-axis, the Y-axis, and the Z-axis directions).

Each 6DoF motion of the shaker table 48 is considered as to take place due to various factors. For example, the 6DoF motion takes place in the shaker table 48 due to various factors including deterioration of the support mechanism of the shaker table 48 or the shaker 100 over time, the case where the center of gravity of the test piece held on the shaker table 48 is positioned off the shaking axis of the shaker 100, and the like. The 6DoF motions may gradually increase due to deterioration over a long period of time or may rapidly increase within a short period of time during a vibration test.

While it is not easy to completely suppress the 6DoF motion, an increase in the 6DoF motion of the shaker table 48 beyond a certain level may affect the accuracy of the vibration test. Further, in a case where the 6DoF motion takes place as a sign of failure in the vibration test device 200, continuous usage without maintenance may lead to failure of the vibration test device 200. Further, when the center of gravity of the test piece W is positioned off the shaking axis of the shaker 100, shaking at a high acceleration while the center of gravity being off the position may lead to a failure of the vibration test device 200.

The 6DoF motion of the shaker table 48 is a phenomenon that could affect the accuracy of the vibration test and lead to a failure of the vibration test device 200, as described hereinabove. However, detecting the crosstalk does not detect rotational motions about axes, because the rotational motions about each axis and the crosstalk, out of the 6DoF motions of the shaker table 48, are different in their directions of motion. Therefore, in the present embodiment, the 3-axis acceleration sensor 135 is arranged in this embodiment so as to enable detection of the 6DOF motion of the shaker table 48, thereby achieving highly-accurate self-diagnosis related to the state of the vibration test device 200, including failure determination, failure prediction, and performance limit determination.

The controller 110 controls driving of the shaker 100. The controller 110 has a drive controller 120 and a self-diagnosis unit 130.

The drive controller 120 controls driving of the shaker 100 by controlling the current and voltage applied to the shaker 100, so as to vibrate the test piece W at a desirable frequency, amplitude, acceleration, vibration pattern, and the like as required in the vibration test. A control signal output from the drive controller 120 is input to the shaker 100 via the amplifier 170. A detection signal from the control sensor 136 provided to the shaker table 48 is input to the drive controller 120 via an A/D converter 180, to determine whether the vibration (response vibration) generated by the shaker 100 meets the necessary desirable vibration (targeted vibration) and to reflect the determination result to the control signal from the drive controller 120.

The self-diagnosis unit 130 performs a determination related to the state of the vibration test device 200 including a failure determination, a failure prediction, and a performance limit determination of the shaker 100. Specifically, the self-diagnosis unit 130 performs a determination related to the state of the vibration test device 200 based on a 6DoF motion of the shaker table 48 calculated based on an input from the 3-axis acceleration sensor 135, the detection signals from the current detector 171 and a voltage detector 172, and the like.

The 3-axis acceleration sensor 135 detects physical quantities related to vibration of the shaker table 48, and the detection signals are input to the self-diagnosis unit 130 via an A/D converter 160. The 6DoF motion of the shaker table 48 is calculated based on the physical quantities detected by the 3-axis acceleration sensor 135.

The current detector 171 and the voltage detector 172 are arranged in the amplifier 170. The current detector 171 detects the current that controls the vibration of the shaker 100. The voltage detector 172 detects the voltage that controls the vibration of the shaker 100. The detection signals from the current detector 171 and the voltage detector 172 are input to the self-diagnosis unit 130 via the A/D converter 160.

The display 190 displays a setting screen related to vibration of the shaker 100, an operation state of the shaker 100, and a self-diagnosis result by the self-diagnosis unit 130. Input to the controller 110 is performed by using an input device such as a touch panel type display 190.

### [Shaker]

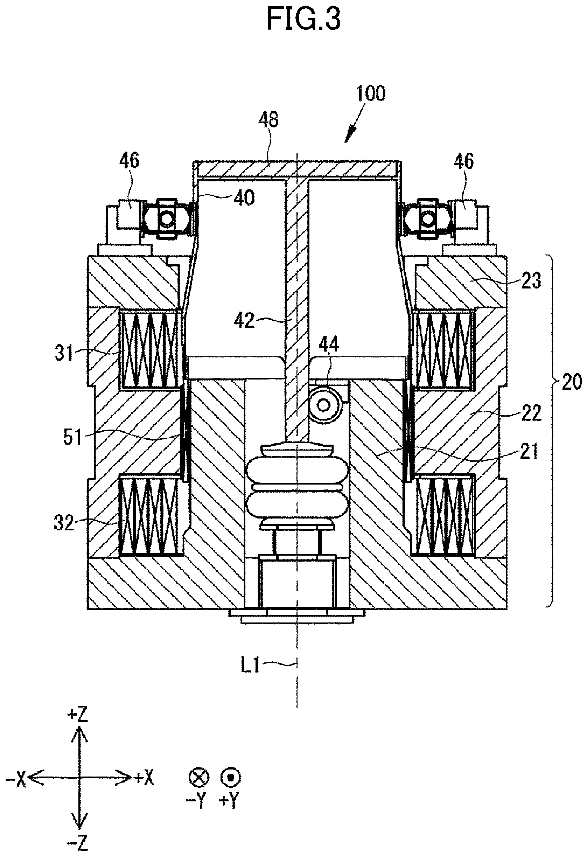

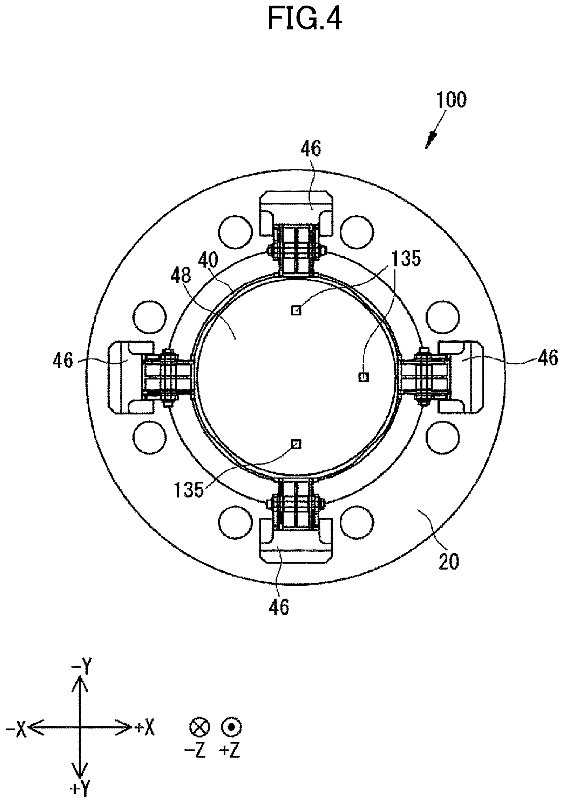

Next, the configuration of the shaker 100 is described. FIG. 3 is a cross-sectional view of the shaker 100 taken along a shaking axis L1. FIG. 4 is a plan view of the shaker 100 of FIG. 1 as viewed in a direction from the positive side to the negative side of the Z-axis direction. The present embodiment assumes that the Z-axis direction is a vertical direction (orthogonal direction), the Y-axis direction is a horizontal direction, and the X-axis direction is a direction perpendicular to a YZ plane.

As illustrated in FIG. 3, the shaker 100 is an electrodynamic shaker arranged so that its shaking axis L1 is parallel to the Z-axis direction, and is configured to generate vibration in the Z-axis direction. The shaker 100 includes a yoke 20, excitation coils 31, 32, a cylinder 40, a drive coil 51, and the like.

The yoke 20 is configured by integrally combining a first yoke part 21, a second yoke part 22, and a third yoke part 23. The excitation coils 31, 32 are attached to the inner circumferential surface of the second yoke part 22. The excitation coils 31, 32 are each wound in a cylindrical shape, and are attached side by side, apart from each other in the direction of the shaking axis L1. Between the outer circumferential surface of the first yoke part 21 and the inner circumferential surface of the second yoke part 22, a magnetic circuit and a magnetic gap are formed by the static magnetic field formed by the excitation coils 31, 32.

The cylinder 40 is a part housed inside the yoke 20 and movable with respect to the yoke 20. Inside the cylinder 40, a guide shaft 42 extends in the Z-axis direction. Around the guide shaft 42, guide rollers 44 that guide the guide shaft 42 in the Z-axis direction are arranged at three positions at intervals of 120 degrees. Each of the guide rollers 44 is supported on the inner wall surface of the first yoke part 21. One end side (the positive side in the Z-axis direction) of the cylinder 40 protrudes with respect to the yoke 20, and is supported by support devices 46 so as to be guided in the Z-axis direction.

The drive coil 51 is a coil arranged in the magnetic gap for generating vibration. The drive coil 51 is wound around the outer circumferential surface of the other end portion (the negative side in the Z-axis direction) of the cylinder 40. The drive coil 51 is inserted so as not to contact the excitation coils 31, 32 and the yoke 20, in a magnetic gap between the excitation coils 31, 32 and the yoke 20 (the first yoke part 21 and the second yoke part 22).

By supplying a direct current from the drive controller 120 (see FIG. 2) to the excitation coils 31, 32 via the amplifier 170, a magnetic circuit (static magnetic field) is generated in the yoke 20 surrounding the excitation coils 31, 32. Further, by supplying an alternating current of a predetermined frequency from the drive controller 120 to the drive coil 51 via the amplifier 170, interaction between the static magnetic field generated in the magnetic gap and the alternating current supplied to the drive coil 51 causes the drive coil 51 to slide in a direction perpendicular to the magnetic flux. Specifically, according to the direction of the current flowing in the drive coil 51, the drive coil 51 and the cylinder 40 repetitively slides in a direction of advancing (forward) outward from the yoke 20 (in the direction towards the positive side of the Z-axis direction) and slides in a direction of withdrawing (retracting) inward to the yoke 20 (in the direction towards the negative side of the Z-axis direction). That is, the drive coil 51 and the cylinder 40 (movable part) vibrate along the Z-axis direction with respect to the yoke 20 (fixed part), according to the frequency of the alternating current supplied to the drive coil 51.

On the other end side (the positive side in the Z-axis direction) of the cylinder 40, the shaker table 48 is provided. On the shaker table 48, the test piece W is held. With this shaker 100, the drive coil 51, the cylinder 40, and the shaker table 48 integrally vibrates along the Z-axis direction to shake the test piece W in the Z-axis direction, by driving the shaker 100 with a direct current and an alternating current supplied from the drive controller 120.

As illustrated in FIG. 4, the support devices 46 are each arranged between the cylinder 40 that reciprocates in the Z-axis direction and an end portion of the yoke 20 (the third yoke part 23) arranged around the cylinder 40.

To the shaker table 48, a plurality of 3-axis acceleration sensors 135 are provided. Each of the 3-axis acceleration sensors 135 is a sensor capable of detecting acceleration in directions of 3 axes perpendicularly crossing one another. By detecting the accelerations in the directions of the 3 axes at three or more separate positions, it is possible to calculate the 6DoF motion of the shaker table 48 based on the detection signals. In the present embodiment, the 3-axis acceleration sensors 135 are disposed at three positions of the shaker table 48, which positions are separate from one another, respectively. Each of the 3-axis acceleration sensors 135 is arranged so that the directions of its perpendicularly-crossing 3 axes along which the 3-axis acceleration sensor 135 is able to detect the acceleration are aligned with the X-axis, Y-axis, and Z-axis, respectively, in one preferred embodiment.

It should be noted that the sensor provided to the shaker table 48 is not limited to the 3-axis acceleration sensor, as long as the physical quantities related to the motion of the shaker table 48 are detected and, based on the detection signals, the physical quantities related to the 6DoF motions of the shaker table 48 are calculated. For example, various sensors, such as 1-axis acceleration sensor and 2-axis acceleration sensor, may be combined to detect the physical quantities necessary to calculate the 6DoF motions. Further, the position of arranging sensor is not particularly limited provided that, if the sensor is an acceleration sensor, the acceleration of the shaker table 48 is detectable.

### [Self-Diagnosis System]

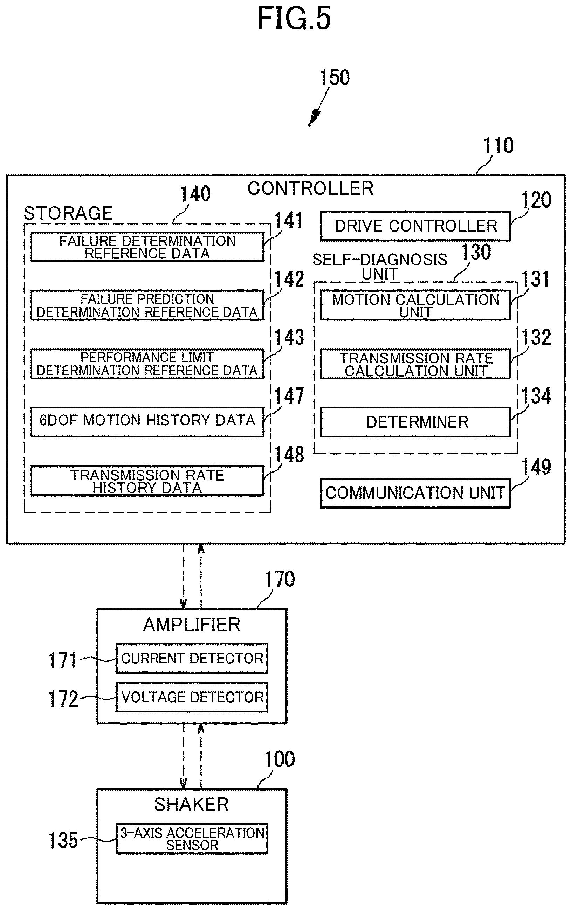

FIG. 5 is a schematic diagram showing a configuration of a self-diagnosis system 150. The self-diagnosis system 150 is a system configured to perform self-diagnosis regarding the state of the vibration test device 200 including the failure determination, the failure prediction, and the performance limit determination of the shaker 100. The self-diagnosis system 150 is provided in each of the plurality of vibration test devices 200 that comprise the vibration test support network system 300.

The determination by the self-diagnosis system 150 includes a determination based on the current operating state of the vibration test device 200 and a determination based on a result of comparison between the current operating state and the history of the past operating state. Further, the determination based on comparison with the past operating state includes determinations of various time frames. For example, the determination includes a determination for a long time frame, which is based on a history from the time of introducing the vibration test device 200, and a determination for a short time frame, which is based on a history from the start of the currently-executed vibration test to the current time point. Further, the self-diagnosis system 150 executes self-diagnosis not only at the time of maintenance of the vibration test device 200, but also while the vibration test device 200 is operated, including the time during the vibration test.

The self-diagnosis system 150 includes the controller 110, the amplifier 170, and the shaker 100.

The controller 110 has a drive controller 120, the self-diagnosis unit 130, a storage 140, and a communication unit 149.

The drive controller 120 controls the drive of the shaker 100 by controlling the current and voltage applied to the shaker 100. Further, the drive controller 120 also performs control such as stopping the driving of the shaker 100 according to the determination result by the self-diagnosis unit 130.

The self-diagnosis unit 130 performs a determination related to the state of the vibration test device 200 including a failure determination, a failure prediction, and a performance limit determination of the shaker 100. The self-diagnosis unit 130 has a motion calculation unit 131, a transmission rate calculation unit 132, and a determiner 134.

The motion calculation unit 131 calculates the physical quantities related to a 6DoF motion of the shaker table 48, based on the detection signals output from the plurality of 3-axis acceleration sensors 135 provided to the shaker table 48. The 6DoF motions include a motion in the axial direction of each of three axes (X-axis, Y-axis, and Z-axis) orthogonal to one another and rotational motion around each of the X-axis, Y-axis, and Z-axis. The physical quantities related to the 6DoF motion are the quantities of the 6DoF motion described in the form of displacement, velocity, acceleration, rotational angle, angular velocity, and angular acceleration. The present embodiment deals with a case of detecting, as the physical quantities related to the 6DoF motion of the shaker table 48, accelerations in axial directions of X-axis, Y-axis, and Z-axis, and accelerations about each of the X-axis, Y-axis, and Z-axis.

The transmission rate calculation unit 132 calculates a transmission rate between the 6DoF motion of the shaker table 48 and the current and voltage, based on the physical quantities related to the 6DoF motion of the shaker table 48 calculated by the motion calculation unit 131 and the detection signals output from the current detector 171 and the voltage detector 172. The present embodiment deals with a case of using, as the physical quantities related to the 6DoF motion of the shaker table 48 used for calculation of the transmission rate, accelerations in axial directions of X-axis, Y-axis, and Z-axis, and accelerations about each of the X-axis, Y-axis, and Z-axis.

Here, the transmission rate for the acceleration and the current and the transmission rate for the acceleration and the voltage are calculated as follows, assuming that the acceleration of the shaker table 48 in the shaking direction (Z-axis direction) is A, the detection signal (the current value applied to the shaker 100) output from the current detector 171 is I, and the detection signal (voltage value applied to the shaker 100) output from the voltage detector 172 is E.
Transmission rate for acceleration and current in the shaking direction = A/I
Transmission rate for acceleration and voltage in the shaking direction = A/E

Further, the transmission rate for the acceleration and the current and the transmission rate for the acceleration and the voltage are calculated as follows, assuming that the acceleration of the shaker table 48 in each direction other than the shaking direction (Z-axis direction) is B, the detection signal (the current value applied to the shaker 100) output from the current detector 171 is I, and the detection signal (voltage value applied to the shaker 100) output from the voltage detector 172 is E.
Transmission rate for acceleration and current in a direction other than the shaking direction = B/I
Transmission rate for acceleration and voltage in a direction other than the shaking direction = B/E

Note that B is acceleration other than the acceleration in the Z-axis direction, that is the acceleration in each of the X-axis and Y-axis directions, and acceleration around each of the X-axis, Y-axis, and Z-axis.

Since the above transmission rate is calculated based on the acceleration of the 6DoF motion of the shaker table 48, the current value applied to the shaker 100, and the voltage value applied to the shaker 100, the transmission rate can be calculated even if the weight of the test piece W held on the shaker table 48 is unknown. It is further possible to perform a determination related to the state of the vibration test device 200 with the transmission rate calculated.

The determiner 134 performs a determination related to the state of the vibration test device 200 including the failure determination, the failure prediction, and the performance limit determination, based on the detection signals output from the current detector 171, the voltage detector 172, and the 3-axis acceleration sensor 135.

For example, the determiner 134 determines the state of the vibration test device 200 by using both the acceleration of the 6DoF motion of the shaker table 48 calculated by the motion calculation unit 131, and the transmission rate calculated by the transmission rate calculation unit 132. Further, for example, the determiner 134 determines the state of the vibration test device 200 by using both the history of the acceleration of the 6DoF motion, that is, changes in the acceleration of the 6DoF motion over time, and history of the transmission rate, that is, changes in the transmission rate over time. A specific determination by the determiner 134 is detailed later.

The storage 140 stores data related to the determination of the state of the vibration test device 200. This data serves as the determination reference when each of the vibration test devices 200 performs self-diagnosis. The storage 140 stores failure determination reference data 141, failure prediction determination reference data 142, performance limit determination reference data 143, 6DoF motion history data 147, and transmission rate history data 148.

The failure determination reference data 141 is determination reference related to the failure of the vibration test device 200, and, for example, is determination reference data for determining whether a failure is taking place in the shaker 100. Specifically, for example, for the transmission rate (A/I) for the acceleration and the current in the shaking direction, the transmission rate (A/E) for the acceleration and the voltage in the shaking direction, the transmission rate (B/I) for the acceleration and the current in a direction other than the shaking direction, and the transmission rate (B/E) for the acceleration and the voltage in a direction other than the shaking direction, the data includes threshold values referred to when determining that a failure has taken place in the shaker 100.

The failure prediction determination reference data 142 is determination reference related to failure prediction of the vibration test device 200, and for example, is determination reference data for determining the probability of a failure taking place in the shaker 100. Specifically, for example, for the transmission rate (A/I) for the acceleration and the current in the shaking direction, the transmission rate (A/E) for the acceleration and the voltage in the shaking direction, the transmission rate (B/I) for the acceleration and the current in a direction other than the shaking direction, and the transmission rate (B/E) for the acceleration and the voltage in a direction other than the shaking direction, the data includes probabilities of a failure taking place in the shaker 100 and threshold values referred to when determining a failure takes place at the probability.

The performance limit determination reference data 143 is determination reference related to the performance limit determination for the vibration test device 200, and, for example, is determination reference data for determining that driving of the shaker 100 has reached its performance limit. Specifically, for example, for the transmission rate (A/I) for the acceleration and the current in the shaking direction, the transmission rate (A/E) for the acceleration and the voltage in the shaking direction, the transmission rate (B/I) for the acceleration and the current in a direction other than the shaking direction, and the transmission rate (B/E) for the acceleration and the voltage in a direction other than the shaking direction, the data includes threshold values referred to when determining that the driving of the shaker 100 has reached its performance limit.

The 6DoF motion history data 147 is data related to the history of the physical quantities of a 6DoF motion calculated by the motion calculation unit 131. For example, when the acceleration of the 6DoF motion is calculated by the motion calculation unit 131, the calculation result is accumulated as the 6DoF motion history data 147 in the storage 140.

The transmission rate history data 148 is data related to the history of the transmission rate calculated by the transmission rate calculation unit 132. When the transmission rate is calculated by the transmission rate calculation unit 132, the calculation result is accumulated as the transmission rate history data 148 in the storage 140.

It should be noted that the self-diagnosis system 150 is not limited to the above-described configuration. For example, a sensor that detects physical quantities inside and outside the shaker 100 may be further provided. For example, as the sensor that detects physical quantities inside the shaker 100, a temperature sensor that detects exhaust temperature from the shaker 100 may be provided. Further, as the sensor that detects physical quantities outside the shaker 100, a temperature sensor that detects ambient temperature around the shaker 100 may be provided.

Instead of evaluating the state of the vibration test device 200 only from the physical quantities of the 6DoF motion of the shaker table 48 calculated by the motion calculation unit 131 and the transmission rate calculated by the transmission rate calculation unit 132, the determiner 134 may evaluate the state of the vibration test device 200 by also using other physical quantities. Further, for example, another function such as a coherence function may be used to evaluate the state of the vibration test device 200.

The determination result given by the determiner 134 is reported to an operator of the vibration test device 200 in the form of display on the display 190 (see FIG. 2) or through audio output.

The communication unit 149 transmits and receives information such as the determination results determined by the determiner 134 and the data used in the determination by the determiner 134 to and from the analysis device 220 connected via the network 210.

### [Analysis Device]

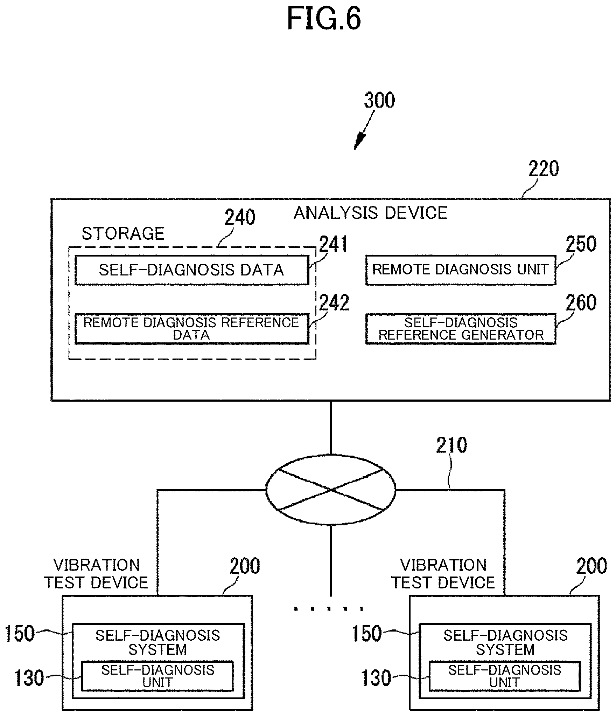

FIG. 6 is a schematic diagram showing a configuration of an analysis device 220. The analysis device 220 remotely diagnoses the failure frequency, the failure probability, and the maintenance/inspection timing for each of the plurality of vibration test devices 200 connected to the network 210.

The analysis device 220 generates self-diagnosis reference update information to update the self-diagnosis determination reference (failure determination reference data 141, failure prediction determination reference data 142, and performance limit determination reference data 143) in each of the vibration test devices 200 based on the self-diagnosis information resulting from the self-diagnosis performed by each vibration test devices 200. The analysis device 220 then updates the self-diagnosis determination reference (failure determination reference data 141, failure prediction determination reference data 142, and performance limit determination reference data 143) in the vibration test device 200 based on the generated self-diagnosis reference update information.

The analysis device 220 includes a storage 240, a remote diagnosis unit 250, and a self-diagnosis reference generator 260.

The storage 240 stores self-diagnosis data 241 and remote diagnosis reference data 242.

The self-diagnosis data 241 accumulates information related to the results of self-diagnosis of each of the plurality of vibration test devices 200. Information related to the results of self-diagnosis includes the determination results related to the state of the vibration test device 200, including failure determination, failure prediction, and performance limit determination of the shaker 100. The self-diagnosis data 241 includes the detection signals used to perform the self-diagnosis. The detection signals accumulated in the self-diagnosis data 241 also include, for example, physical quantities related to the 6DoF motion of the shaker table 48 calculated based on the detection signal from the 3-axis acceleration sensor 135 and the transmission rate about the acceleration and current and voltage of the 6DoF motion. These pieces of information are transmitted individually from each of the vibration test devices 200 and are accumulated in the storage 240, in association with each of the vibration test devices 200.

The remote diagnosis reference data 242 stores reference data of determinations related to remote diagnosis. Specifically, for example, in the data accumulated, the determination results related to the state of the vibration test device 200, including the failure determination, the failure prediction, and the performance limit determination of the shaker 100 are associated with the failure frequency, the failure probability, and the maintenance/inspection timing of the shaker 100.

The remote diagnosis unit 250 remotely diagnoses the failure frequency, the failure probability, and the maintenance/inspection timing for each of the plurality of vibration test devices 200, individually based on the self-diagnosis data 241 and remote diagnosis reference data 242 stored in the storage 240.

The self-diagnosis reference generator 260 performs data analysis based on the detection signals and self-diagnosis information obtained from the plurality of vibration test devices 200 via the network 210, and generates self-diagnosis reference update information to update the self-diagnosis reference information based on the results of the data analysis. The detection signals and the self-diagnosis information are accumulated as the self-diagnosis data 241.

The self-diagnosis reference update information generated is transmitted to each of the vibration test devices 200 via the network 210. Upon receiving the self-diagnosis reference update information, the vibration test device 200 updates the self-diagnosis determination reference (failure determination reference data 141, failure prediction determination reference data 142, and performance limit determination reference data 143) stored in the respective storage 140 based on the self-diagnosis reference update information.

The self-diagnosis reference update information generated by the self-diagnosis reference generator 260 is generated for each vibration test devices 200 of the same model (specification) in one preferred embodiment, but may be generated for vibration test devices 200 of different models (specifications).

### [Evaluation Items]

Next, the following describes exemplary evaluation items used for a self-diagnosis related to the state of the vibration test device 200 and an exemplary determination result.

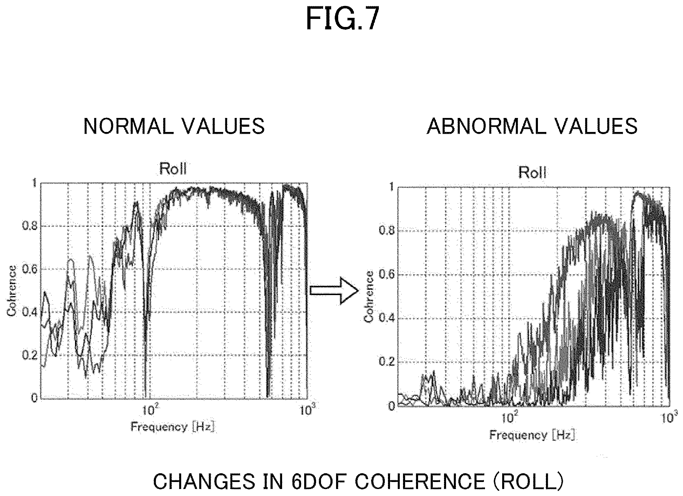

FIG. 7 is a graph showing an exemplary change in coherence with respect to rotation around an axis, out of 6DoF motions. Variation in the coherence is one of the evaluation items used in a determination related to the state of the vibration test device 200. In FIG. 7, values in a normal state of the shaker 100 are shown on the left side, and values while an abnormality takes place in the shaker 100 are shown on the right side of the same figure. The horizontal axis of each graph represents the frequency of vibration, and the vertical axis represents the value of coherence. FIG. 7 shows the linearity of rotation (output) about the axis with respect to the current (input) supplied to the shaker 100. The closer the coherence value is to 1, the more linear it is at that frequency.

Regarding the normal values on the left side figure, the coherence is not 1 throughout the entire frequency area, and there is an area with high linearity (area relatively close to 1) and an area with low linearity (area relatively far from 1), depending on the frequencies. Such a relationship between the frequency and the coherence is a characteristic different for each shaker 100. Therefore, it cannot be determined that an abnormality has occurred in the shaker 100 only because the coherence falls below a predetermined value (for example, 0.5). A history of the coherence calculated while the vibration test device 200 is operated is accumulated in the storage 140.

In the shaker 100 having a characteristic as shown in the left side figure, a frequency area with low linearity may increase as shown in the right side figure when, for example, deterioration over time progresses. While it is difficult to accurately determine the state of the shaker 100 from the coherence value alone at one point, but adding the change in the coherence over time stored in the storage 140 to the evaluation items for the determination, the determiner 134 is able to improve the accuracy of self-diagnosis related to the state of the vibration test device 200 including the failure determination, the failure prediction, and the performance limit determination of the shaker 100.

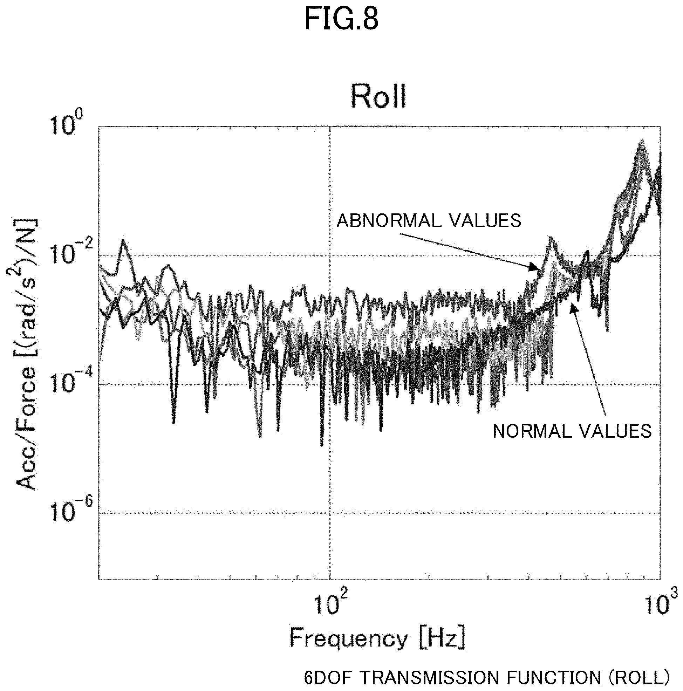

FIG. 8 is a graph showing an exemplary history of transmission rates with respect to rotation around an axis, out of the 6DoF motions. Of the 6DoF motion of the shaker table 48, the history of the transmission rates related to a motion in a direction other than the shaking direction is one of the evaluation items used in a determination related to the state of the vibration test device 200. The horizontal axis of the graph represents the frequency of vibration, and the vertical axis represents the transmission rate. FIG. 8 shows a plurality of graph lines and each graph line represents a relationship between the transmission rate and the frequency at a time point. The graph indicated as the normal values in FIG. 8 represents the relationship between the transmission rate and the frequency while the shaker 100 is in the normal state. The graph indicated as the abnormal values represents the relationship between the transmission rate and the frequency while an abnormality takes place in the shaker 100.

The transmission rate related to the rotation about the axis is not constant even in the normal state, and there is an area with high the transmission rates an area with low transmission rates depending on the frequencies. Such a relationship between the frequency and the transmission rate is a characteristic different for each shaker 100. A history of the transmission rate calculated while the vibration test device 200 is operated is accumulated in the storage 140.

In the shaker 100 having a characteristic as shown in the graph indicated as to be the normal values, the transmission rate related to motions other than a motion in the shaking direction may increase as shown in the graph indicated as the abnormal values when, for example, deterioration over time progresses. Adding the change in the transmission rate over time stored in the storage 140 to the evaluation items and perform a determination by adding the history of the transmission rates, the determiner 134 is able to improve the accuracy of self-diagnosis related to the state of the vibration test device 200 including the failure determination, the failure prediction, and the performance limit determination of the shaker 100.

### [Determination]

The following describes an exemplary determination by the determiner 134.

### [Determination based on 6DoF motion]

Of the 6DoF motions of the shaker table 48, for example, an increase beyond a certain level in the acceleration other than the acceleration in the shaking direction of the shaker 100 may affect the accuracy of the vibration test. Further, in a case where the 6DoF motions take place as a sign of failure in the shaker 100, continuous usage without maintenance may lead to failure of the shaker 100. Further, when the center of gravity of the test piece W is positioned off the shaking axis of the shaker 100, shaking at a high acceleration while the center of gravity being off the position may lead to a failure of the shaker 100.

Therefore, for example, when any acceleration other than the acceleration in the shaking direction of the shaker 100 out of the 6DoF motions exceeds a predetermined threshold value stored as the failure determination reference data 141, the failure prediction determination reference data 142, and the performance limit determination reference data 143, the determiner 134 may determine at least any of a state where a failure has taken place in the shaker 100, a state where a probability of a failure taking place in the shaker 100 is rising, and a state where the shaker 100 has reached its performance limit. Further, the determination related to failure may include a determination related to estimation of a failed part in the shaker 100.

Further, since there is a possibility that no failure takes place in the shaker 100 but there is a problem related to the setting of the test piece W such that the center of gravity of the test piece W is off the shaking axis of the shaker 100, it is possible to include a determination that the center of gravity of the test piece W held on the shaker table 48 is off the shaking axis of the shaker 100.

When the determiner 134 determines that a failure takes place in the vibration test device 200, the drive controller 120 may perform control of stopping the shaker 100.

### [Determination Based on Transmission Rate]

Although an acceleration B of the shaker table 48 in a direction other than the shaking direction (Z-axis direction) is small while the shaker 100 is in a normal state and the transmission rate B/I and the transmission rate B/E are therefore small, the transmission rate B/I and the transmission rate B/E tend to increase due to an increase in the acceleration B which is attributed to progressing deterioration over time of the shaker 100.

Therefore, for example, when any of the transmission rate B/I and the transmission rate B/E, out of the transmission rates, calculated based on an acceleration other than the acceleration in the shaking direction of the shaker 100 exceeds a predetermined threshold value stored as the failure determination reference data 141, the failure prediction determination reference data 142, and the performance limit determination reference data 143, the determiner 134 may determine at least any of a state where a failure has taken place in the shaker 100, a state where a probability of a failure taking place in the shaker 100 is rising, or a state where the shaker 100 has reached its performance limit. Further, the determination related to failure may include a determination related to estimation of a failed part in the shaker 100.

Further, since there is a possibility that no failure takes place in the shaker 100 but there is a problem related to the setting of the test piece W such that the center of gravity of the test piece W is off the shaking axis of the shaker 100, it is possible to include a determination that the center of gravity of the test piece W held on the shaker table 48 is off the shaking axis of the shaker 100.

When the determiner 134 determines that a failure takes place in the vibration test device 200, the drive controller 120 may perform control of stopping the shaker 100.

Meanwhile, the transmission rate (A/I) related to the acceleration in the shaking direction of the shaker 100 and the current and the transmission rate (A/E) related to the acceleration in the shaking direction and the voltage vary depending on the frequency, the amplitude, the acceleration, and the weight of the test piece W. Further, the transmission rate A/I and the transmission rate A/E in the shaking direction do not contain the weight of the test piece W. Therefore, for example, when the weight of the test piece W is great for the frequency, the amplitude, and the acceleration of the vibration to be added to the shaker 100, the transmission rate A/I and the transmission rate A/E in the shaking direction tend to become small.

Therefore, for example, when any of the transmission rate A/I and the transmission rate A/E in the shaking direction of the shaker 100 falls short of a predetermined threshold value stored as the failure determination reference data 141, the failure prediction determination reference data 142, and the performance limit determination reference data 143, the determiner 134 may determine that the shaker 100 has reached its performance limit.

### [Reporting of Determination Result]

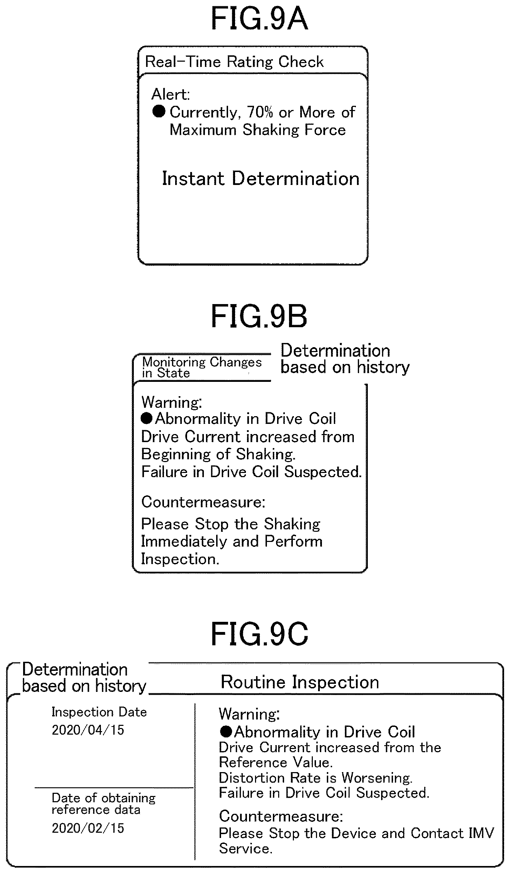

FIGS. 9A, 9B, and 9 C are each a diagram showing an exemplary display screen reporting a determination result related to the state of the vibration test device 200. The self-diagnosis related to the state of the vibration test device 200 including the failure determination, the failure prediction, and the performance limit determination of the shaker 100 includes a determination based on the current operating state, a determination based on the short-term history of the operating state, and a determination based on the long-term history of the operating state.

FIG. 9A shows an exemplary determination result based on the current operating state. The determination result shown on this display screen is a determination result based on the current operating state. The display screen shows "Currently, 70% or More of Maximum Shaking Force" as an alert resulting from a real-time rating check, and reports the determination result of the performance limit determination of the shaker 100.

FIG. 9B shows an exemplary determination result based on the short-term history of the operating state. The determination result shown on this display screen is a short-term determination result based on a history from the beginning of the currently executed vibration test to the current time point. The display screen shows a warning "Drive Current increased from Beginning of Shaking. Abnormality in Drive Coil Suspected.", and reports the determination result of the failure determination or the failure prediction of the shaker 100 as well as the determination result related to estimation of failed part of the shaker 100. As a countermeasure, the display further shows "Please Stop the Shaking Immediately and Perform Inspection." and informs the operator of a specific measures to be taken.

FIG. 9C shows an exemplary determination result based on the long-term history of the operating state. The determination result shown on this display screen is a determination result based on a comparison of an operating state at a routine inspection (inspection date of 2020/04/15) and the history of an operating state on a date of obtaining reference data (2020/02/15). The display screen shows a warning "Drive Current increased from the Reference Value. Distortion Rate is Worsening. Abnormality in Drive Coil Suspected.", and reports the determination result of the failure determination or the failure prediction of the shaker 100 as well as the determination result related to estimation of failed part of the shaker 100. As a countermeasure, the display further shows "Please Stop the Device and Contact IMV Service" and informs the operator of a specific measures to be taken.

With the vibration test device 200 related to the present embodiment as described hereinabove, it is possible to accurately perform self-diagnosis related to the state of the vibration test device 200, including the failure determination, the failure prediction, and the performance limit determination of the vibration test device 200.

### [Second Embodiment]

When generating remote diagnosis and self-diagnosis reference update information by the analysis device 220 described in the first embodiment, it is possible to use a machine-learned learning model that outputs remote diagnosis information in response to input of self-diagnosis information, and a machine-learned learning model that outputs self-diagnosis reference update information in response to input of the detection signal and self-diagnosis information.

In machine learning for the learning model that outputs remote diagnosis information, for example, the training data may include a group of self-diagnosis data from the plurality of vibration test devices 200 (self-diagnosis results such as the failure determination, the failure prediction, and the performance limit determination of the shaker 100, and information used for self-diagnosis), a failure frequency, a failure probability, and a maintenance/inspection timing for the vibration test devices 200. The trained learning model may then be used to estimate the failure frequency, the failure probability, and the maintenance/inspection timing of each of the vibration test devices 200 based on the self-diagnosis data (self-diagnosis results such as the failure determination, the failure prediction, and the performance limit determination of the shaker 100, and information used for the self-diagnosis) from the corresponding vibration test device 200.

Further, in machine learning for the learning model that outputs the self-diagnosis reference update information, for example, the training data may include a group of detection signals (detection signals and information obtained based on the detection signals), self-diagnosis information (self-diagnosis results such as the failure determination, the failure prediction, and the performance limit determination of the shaker 100), and the detection signals after a certain period of time (detection signals and information obtained based on the detection signals), and self-diagnosis information (self-diagnosis results such as the failure determination, the failure prediction, and the performance limit determination of the shaker 100). Then, the trained learning model may be used to generate the self-diagnosis reference update information from the detection signals (detection signals and information obtained based on the detection signals) and self-diagnosis information (self-diagnosis results such as the failure determination, the failure prediction, and the performance limit determination of the shaker 100).

In a learning model that has been trained to output the self-diagnosis reference update information, the learning model may be retrained by using the self-diagnosis results based on the updated self-diagnosis reference as the training data.

Machine learning methods are not limited to "supervised learning" using the training data as described above, but may also be "unsupervised learning" that does not use the training data. In the case of unsupervised learning for a learning model that outputs remote diagnosis information, for example, a learning model is constructed in relation to the distribution of the input data by inputting a large amount of self-diagnosis data from a plurality of vibration test devices 200 (self-diagnosis results, such as the failure determination, the failure prediction, and the performance limit determination of the shaker 100, and information used for self-diagnosis). The constructed learning model may then be compared with the input self-diagnosis data (self-diagnosis results, such as the failure determination, the failure prediction, and the performance limit determination of the shaker 100, and information used for self-diagnosis) to estimate the failure frequency, the failure probability, and the maintenance/inspection timing.

### [Modification]

The embodiments disclosed here are illustrative in all respects and are not intended to be a basis for limiting interpretation. The technical scope of the present invention is not interpreted only by the above-described embodiments, but is defined based on the description of the claims. The technical scope of the present invention includes all modifications within the meaning and range equivalent to the scope of the claims.

The present embodiment deals with a vibration test device 200 having a shaker 100 shaking in one axial direction. However, the present invention may be applied to a multi-axial vibration test device such as 2-axial, or 3-axial vibration test device. Further, the configuration of the shaker table 48 is a mere example, and the shaker table may have other configurations.

### INDUSTRIAL APPLICABILITY

The present invention is applicable to a vibration test support network system that connects a plurality of vibration test devices via a network and supports maintenance of vibration test devices and stabilization of accuracy of the vibration test through analysis of self-diagnosis information by the vibration test devices.

### DESCRIPTION OF REFERENCE CHARACTERS

- 300: Vibration Test Support Network System
- 200: Vibration Test Device
- 210: Network
- 220: Analysis Device
- 100: Shaker
- 48: Shaker Table

## Claims

1. A vibration test support network system, comprising:
a plurality of vibration test devices each having a shaker configured to shake a shaker table,
a network that connects the plurality of vibration test devices, and
an analysis device connected to the network and configured to transmit and receive information to and from the plurality of vibration test devices via the network, wherein
the information includes at least any of:
self-diagnosis information related to the plurality of vibration test devices, which is generated by the plurality of vibration test devices;
remote diagnosis information related to the plurality of vibration test devices, which is generated by the analysis device;
maintenance information related to updates, maintenance, or support of the plurality of vibration test devices; or
vibration test information related to vibration tests performed on the plurality of vibration test devices,
the self-diagnosis information includes at least one of: a failure determination, a failure prediction, or a performance limit determination, each of which is information related to the plurality of vibration test devices, and
the remote diagnosis information includes at least one of: a failure frequency, a failure probability, or a maintenance/inspection timing, each of which is information related to the plurality of vibration test devices.

2. The vibration test support network system of claim 1, wherein
the analysis device includes:
a self-diagnosis information storage configured to store the self-diagnosis information associated with each of the plurality of vibration test devices;
a remote diagnosis reference storage configured to store remote diagnosis reference information related to the remote diagnosis; and
a remote diagnosis unit configured to generate remote diagnosis information based on the self-diagnosis information stored in the self-diagnosis information storage and the remote diagnosis reference information stored in the remote diagnosis reference storage.

3. The vibration test support network system of claim 1, wherein
the analysis device includes:
a self-diagnosis information storage configured to store the self-diagnosis information associated with each of the plurality of vibration test devices; and
a remote diagnosis unit with a learning model that is trained to output remote diagnosis information upon input of the self-diagnosis information.

4. The vibration test support network system of claim 2 or claim 3, wherein
each of the plurality of vibration test devices includes:
a detector configured to detect a state of the vibration test device;
a self-diagnosis reference storage configured to store self-diagnosis reference information related to self-diagnosis; and
a self-diagnosis unit configured to generate the self-diagnosis information based on a detection signal output from the detector and the self-diagnosis reference information stored in the self-diagnosis reference storage, and
the analysis device
performs data analysis based on the detection signal and the self-diagnosis information obtained from each of the plurality of vibration test devices via the network, and generate self-diagnosis reference update information for updating the self-diagnosis reference information based on a result of the data analysis, and
updates, via the network, the self-diagnosis determination reference stored in the self-diagnosis reference storage of each of the plurality of vibration test devices based on the self-diagnosis reference update information.

5. The vibration test support network system of claim 2 or claim 3, wherein
each of the plurality of the vibration test devices includes:
a detector configured to detect a state of the vibration test device,
a self-diagnosis reference storage configured to store self-diagnosis reference information related to self-diagnosis, and
a self-diagnosis unit configured to generate the self-diagnosis information based on a detection signal output from the detector and the self-diagnosis reference information stored in the self-diagnosis reference storage, and
the analysis device
includes a learning model that is trained to output self-diagnosis reference update information that updates the self-diagnosis reference information upon input of the detection signal and the self-diagnosis information obtained from each of the plurality of vibration test devices via the network, and
updates the self-diagnosis determination reference stored in the self-diagnosis reference storage of each of the plurality of vibration test devices based on the self-diagnosis reference update information output from the learning model via the network.

6. The vibration test support network system of claim 5, wherein
the analysis device retrains the learning model using the detection signal and the self-diagnosis information obtained from each of the plurality of vibration test devices via the network.

7. The vibration test support network system of any one of claims 1 to 6,
wherein
each of the plurality of vibration test devices includes:
a drive controller configured to control drive of the shaker by controlling current and voltage applied to the shaker;
a current detector configured to detect the current that controls vibration of the shaker;
a voltage detector configured to detect the voltage that controls vibration of the shaker;
a motion detector configured to detect physical quantities related to a motion of the shaker table; and
a self-diagnosis unit that generates the self-diagnosis information, including a failure determination, a failure prediction, and a performance limit determination, based on detection signals output from the current detector, the voltage detector, and the motion detector.

8. The vibration test support network system of claim 7, wherein
the self-diagnosis unit include a motion calculation unit configured to calculate physical quantities related to a 6DoF motion of the shaker table, based on the detection signal output from the motion detector, and
the self-diagnosis unit generates the self-diagnosis information by adding the physical quantities related to the 6DoF motion calculated by the motion calculation unit.

9. The vibration test support network system of claim 8, further comprising
a motion storage configured to store a history of physical quantities related to the 6DoF motion calculated by the motion calculation unit, wherein
the self-diagnosis unit generates the self-diagnosis information by adding the history of physical quantities related to the 6DoF motion stored in the motion storage.

10. The vibration test support network system of any one of claims 8 or 9, further comprising
a transmission rate calculation unit configured to calculate a transmission rate between the 6DoF motion of the shaker table and the current and voltage, based on the physical quantities related to the 6DoF motion of the shaker table, and detection signals output from the current detector and the voltage detector, wherein
the self-diagnosis unit generates the self-diagnosis information by adding the calculated transmission rate,

11. The vibration test support network system of claim 10, further comprising
a transmission rate storage configured to store a history of transmission rates calculated by the transmission rate calculation unit, wherein
the self-diagnosis unit generates the self-diagnosis information by adding the history of the transmission rates stored in the transmission rate storage.
